Europäisches Patentamt

European Patent Office

Office européen des brevets

(19)

(11) Veröffentlichungsnummer: **0 359 758 B1**

(12) # EUROPÄISCHE PATENTSCHRIFT

(45) Veröffentlichungstag der Patentschrift: **11.11.92**

(51) Int. Cl.⁵: **B01F 15/04**

(21) Anmeldenummer: **88903761.0**

(22) Anmeldetag: **05.05.88**

(86) Internationale Anmeldenummer:
**PCT/DE88/00263**

(87) Internationale Veröffentlichungsnummer:
**WO 88/08745 (17.11.88 88/25)**

(54) **FLÜSSIGKEITSMISCHBATTERIE.**

(30) Priorität: **09.05.87 DE 3715563**

(43) Veröffentlichungstag der Anmeldung:
**28.03.90 Patentblatt 90/13**

(45) Bekanntmachung des Hinweises auf die
Patenterteilung:
**11.11.92 Patentblatt 92/46**

(84) Benannte Vertragsstaaten:
**AT DE FR GB IT SE**

(56) Entgegenhaltungen:
**WO-A-82/02101**
**CH-A- 158 534**
**US-A- 2 145 133**
**US-A- 3 038 496**
**US-A- 3 412 744**

(73) Patentinhaber: **SCHWEIKERT, Walter**
**Esslinger Strasse 6**
**W-7305 Altbach(DE)**

(72) Erfinder: **SCHWEIKERT, Walter**
**Esslinger Strasse 6**
**W-7305 Altbach(DE)**

(74) Vertreter: **Schuster, Gregor, Dipl.-Ing. et al**
**Patentanwälte Schuster & Thul Wiederholds-**
**trasse 10**
**W-7000 Stuttgart 1(DE)**

# Beschreibung

## Stand der Technik

Die Erfindung geht aus von einer Mischbatterie für Flüssigkeiten nach der Gattung des Hauptanspruchs.

Mischbatterien für Flüssigkeiten sind in vielfältiger Weise bekannt, wobei die Mischung von Flüssigkeiten dadurch stattfindet, daß über mindestens zwei Zuflußleitungen der Mischbatterie in der Temperatur oder der Art unterschiedliche Flüssigkeiten zugeführt werden, die dann innerhalb der Batterie gemischt und über mindestens eine Abflußleitung als Flüssigkeitsgemisch dem Verbraucher zugeführt werden.

Die von der jeweiligen Flüssigkeit dem Gemisch zugeführte Menge hängt einerseits von den Steuerquerschnitten ab, über die die jeweilige Flüssigkeit der Mischbatterie zugeführt wird, sowie von der vom Verbraucher abgenommenen Menge, und andererseits von den Drücken der zufließenden Flüssigkeiten und dem Rückstau auf der Verbraucherseite.

Die Erfindung betrifft nicht Ventilbatterien, bei denen durch unterschiedlich gesteuerte Querschnitte ein konstanter Druck oder Durchfluß erhalten bleibt und auch nicht Mischbatterien, die nur mit einem Drehschieber oder dgl. arbeiten, sondern ausschließlich Mischbatterien, bei denen über die beweglichen Ventilglieder die zugeführten Flüssigkeitsströme durch die von den beweglichen Ventilgliedern gesteuerten Durchströmquerschnitte bestimmt werden. Üblicherweise handelt es sich um Ventile, bei denen das bewegliche Ventilglied über einen schraubenartigen Antrieb (Schnecke) über eine Ventilwelle von außerhalb des Ventils betätigt wird. Eine übliche Mischbatterie ist beispielsweise die Zulaufbatterie für eine Badewanne, in der kaltes und warmes Wasser durch Ändern der jeweiligen Zulaufquerschnitte miteinander gemischt wird und nahezu ohne Widerstand in die Wanne abfließt.

Es gibt aber auch Mischbatterien, bei denen auf einer Achse zwei bewegliche Ventilglieder angeordnet sind, so daß beim Verschieben der Achse, was beispielsweise auch über eine Schnecke und Verdrehen von außerhalb des Ventils erfolgen kann, ein Zuflußquerschnitt verengt und der andere im gleichen Verhältnis vergrößert wird. Im Unterschied zur Badewannenbatterie ist hier die Zuordnung der Kennlinien der beiden Ventile festgelegt und nicht änderbar. Nachteiligerweise liegt damit aber auch die Durchströmmenge fest, d.h. der Gesamtquerschnitt beider Zuflüsse teilt sich je nach Lage der Verstellachse zwischen den zwei Zuflußquerschnitten auf, so daß der Anwendungsbereich sehr eingeschränkt ist, nämlich beispielsweise als Mischventil in Heizungsanlagen oder als Vorventil einer brauchbaren Wasseranlage.

Eine andere bekannte Mischbatterie ist beispielsweise in der Druckschrift WO-A-82/02101 beschrieben. Diese Mischbatterie ist einerseits konstruktiv aufwendig und erfordert anderseits mehrere Handlungen, um die gewünschte Proportionalitäts- und Durchflußänderung konkret zu erzielen. Zur Änderung der Menge oder der Proportion wird jeweils eine andere Verstelleinrichtung betätigt. Diese ist nur in Verbindung mit einer komplizierten Automatik denkbar, bei der über ein zentrales Steuergerät die beiden unabhängigen Verstelleinrichtungen angesteuert werden, bis das gewünschte Ergebnis als Durchgangsquerschnitt bzw. Proportion erreicht ist. Um ein solches Gerät praktikabel zu machen, müssen entsprechende Geber vorhanden sein, die für die jeweilige Einstellung der beiden unabhängigen Einstellmöglichkeiten ein verhältnismäßiges Resultat angeben.

## Vorteile der Erfindung

Die erfindungsgemäße Mischbatterie mit den kennzeichnenden Merkmalen des Hauptanspruchs hat demgegenüber den Vorteil, daß nahezu jede gewünschte Mischkennlinie, und dies bei gleichzeitiger Änderung der Abflußmenge erzielt werden kann, ohne daß eine aufwendige automatische Steuerung erforderlich ist. Die Kennlinie ergibt sich aus der Kupplung der Ventilwellen über die außerhalb der Ventilgehäuse auf den Ventilwellen befestigten Zahnräder, deren Zähne ineinanderkämmen, wobei die Durchströmquerschnitte bei der Verstellung gegensinnig oder, durch den Einsatz von Zwischenzahnrädern, gleichsinnig geändert werden können.

So kann bei der Querschnittsänderung des ersten Ventils über die Kopplung erreicht werden, daß die Querschnittsänderung des zweiten Ventils gleichsinnig erfolgt, aber in einem anderen Größenmaß. Während das erste Ventil beispielsweise einer Umdrehung 2 mm Hub am beweglichen Ventilglied bewirkt, kann über die Kopplung erreicht werden, daß das zweite Ventil nur eine halbe Umdrehung, also nur 1 mm Hub seines beweglichen Ventilglieds erfährt. Natürlich ist auch denkbar, daß die Schnecke des zweiten Ventiles eine andere Gangsteile aufweist, so daß dort beim zweiten Ventil bei gleichfalls einer ganzen Umdrehung entweder wie gewünscht eine größerer oder kleinerer Hub des beweglichen Ventilglieds zurückgelegt wird als beim ersten Ventil.

Bei einer gegensinnigen Querschnittsänderung der Ventile bewirkt eine Querschnittsvergrößerung des ersten Ventils eine Querschnittsverkleinerung des zweiten Ventils. Hierdurch kann sehr schnell eine Änderung der Durchströmquerschnitte bei nur relativ geringer Verstellung erzielt werden.

Durch die an den Zahnrädern oder an zusätzlich vorgesehenen Zwischenzahnrädern oder Antriebszahnrädern vorgesehenen Zahnlücken kann die Kopplung außer Wirkung genommen werden, so daß die Ventile manuell unabhängig voneinander betätigbar sind. Das Antriebsrad weist dafür vorzugsweise einen wesentlich größeren Durchmesser als die Abtriebszahnräder auf, da meist pro seiner Umdrehung nur eine Lücke auftritt, um so eine im übrigen kontinuierliche Steuerung zu gewährleisten. Durch die Anordnung der Zahnräder außerhalb der Ventilgehäuse auf zueinander parallelen Ventilwellen können vorteilhafterweise serienmäßige Ventile mit ihren Abflußanschlüssen unmittelbar aneinander geschraubt werden.

Natürlich können erfindungsgemäß auch mehr als zwei Ventile verwendet werden, die dann zu einem Block zusammengefaßt werden und bei denen der Antrieb vorzugsweise von einem Ventil aus erfolgt, das beispielsweise durch einen Stellmotor betätigt wird. Statt eines Flachsitzventils können natürlich auch konische Ventile oder solche mit einem Schieber dienen, maßgebend ist, daß das den Durchgangsquerschnitt bestimmende bewegliche Ventilglied beim Verdrehen der Ventilwelle einen entsprechenden Kennsteuerquerschnitt bestimmt. Außer den Anwendungsbereichen zwischen Kalt- und Warmwasser können auch solche Mischungen angestrebt werden, wo farbige Flüssigkeiten gemischt werden oder solche mit einer dritten Temperatur, wie beispielsweise Eiswasser.

Nach einer Ausgestaltung der Erfindung sind die Zahnräder als Sätze gegen andere Sätze mit anderen Durchmesserverhältnissen austauschbar. Diese Ausgestaltung hat den Vorteil, daß auf einfache Weise die Kennlinie der Mischbatterie verändert werden kann.

Nach einer weiteren Ausgestaltung der Erfindung kann bei dem meist als Sitzventil ausgebildeten Ventil das bewegliche Ventilteil oder der Ventilsitz ein nachgiebiges Dichtteil aufweisen, so daß ausgehend vom geschlossenen Zustand das eine Ventil bereits geöffnet hat, während das andere Ventil noch durch die Nachgiebigkeit des Dichtteils geschlossen bleibt, um dann erst nach Zurücklegen eines bestimmten Querschnitts auch den anderen Flüssigkeitsstrom freizugeben und umgekehrt. Statt eines nachgiebigen Dichtteils kann diese Endstellung auch durch eine Rutschkupplung zwischen dem Antriebszahnrad und der Verdrehwelle des beweglichen Ventilteils ermöglicht werden.

Weitere Vorteile und vorteilhafte Ausgestaltungen der Erfindung sind der nachfolgenden Beschreibung, der Zeichnung und den Ansprüchen entnehmbar.

Zeichnung

Ein Ausführungsbeispiel des Gegenstandes der Erfindung ist in der Zeichnung dargestellt und im folgenden näher beschrieben. Es zeigen:

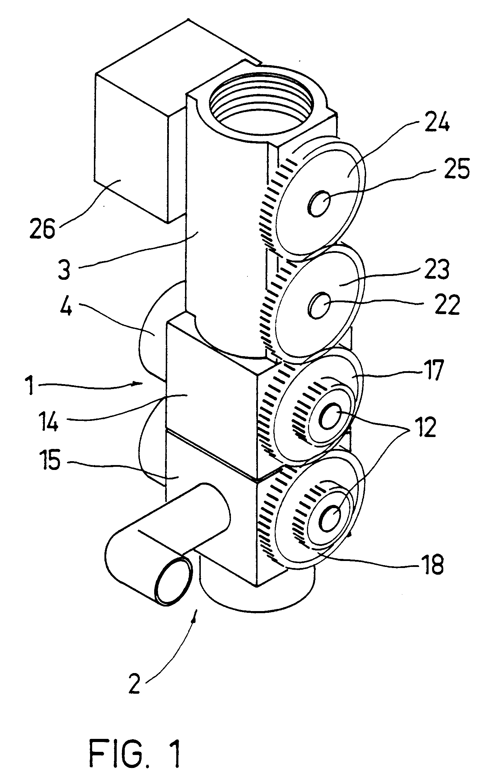

Fig. 1 eine erfindungsgemäße Mischbatterie in perspektivischer Ansicht,

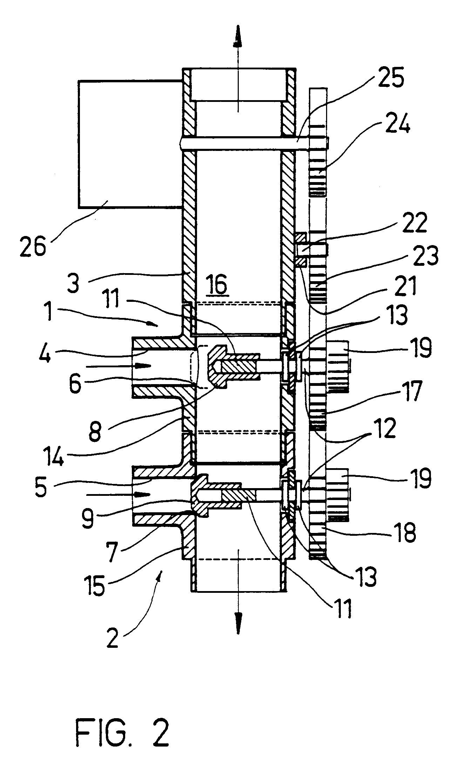

Fig. 2 einen Längsschnitt durch die Mischbatterie aus Fig. 1 und

Fig. 3 verschiedene erfindungsgemäße Zahnradgetriebe schematisch dargestellt.

Beschreibung des Ausführungsbeispiels

Bei dem dargestellten Ausführungsbeispiel sind zwei übliche Sitzventile 1 und 2 mit einem Stutzen 3 zu einer Mischbatterie zusammengeschraubt. Die Gehäuse der Sitzventile 1 und 2 weisen jeweils einen Zuflußanschluß 4 und 5 auf und jeweils einen Ventilsitz 6 und 7, der mit einem beweglichen Ventilglied 8 und 9 zusammenwirkt. Im beweglichen Ventilglied ist jeweils eine Gewindebohrung 11 vorhanden, in der die ein entsprechendes Gewinde aufweisende Ventilwelle 12 arbeitet. Die Ventilwelle 12 weisen Bünde 13 auf, die sich am jeweiligen Ventilgehäuse 14 und 15 abstützen, um ein axiales Verschieben der Ventilwellen 12 zu unterbinden.

Die Ventilgehäuse 14 und 15 sowie der Stutzen 3 sind derart zusammengeschraubt, daß ein gemeinsamer Mischraum 16 entsteht, aus dem, wie durch die Pfeile dargestellt, das Gemisch abströmen kann.

Auf den Ventilwellen 12 sind beim Ventil 1 ein Zahnrad 17 und beim Ventil 2 ein Zahnrad 18 angeordnet, deren Zähne ineinanderkämmen. Auf den Zahnrädern 17 und 18 sind Griffe 19 vorhanden, um die Ventilwellen 12 auch von Hand verdrehen zu können.

Auf dem Stutzen 3 ist eine Leerlaufführung 21 angeordnet für die Welle 22 eines Zwischenzahnrades 23. Dieses Zwischenzahnrad 23 kämmt mit seinen Zähnen einerseits im Zahnrad 17 und andererseits in einem Zahnrad 24, dessen Welle 25 von einem Stellmotor 26 betätigt wird. Das Zwischenzahnrad 23 dient somit gleichzeitig als Kupplung zwischen Stellmotor und den Zahnrädern 17 und 18, so daß bei dessen Entfernen die Ventile von Hand betätigt werden können. Je nach durch die beweglichen Ventilglieder 8 und 9 und die Ventilsitze 6 und 7 bestimmten Durchgangsquerschnitte strömt über die Zuflußanschlüsse 4 und 5 in Pfeilrichtung eine entsprechende Menge in den Mischraum 16, um von dort wiederum in Pfeilrichtung abfließen zu können. Je nach Gewindeart, also Links- oder Rechtsgewinde, bewirkt ein Verdrehen des Zahnrades 17 und ein entsprechendes Verdrehen des Zahnrades 18 ein gemeinsames oder gegenseitiges Vergrößern bzw. Verkleinern der Zuflußquerschnitte zueinander. Natürlich kann auch das Zahnrad 24 statt über das Zwischenrad 23 zu betätigen, direkt an dem Zahnrad 17 eingreifen, oder es kann zwischen den Zahnrädern 17 und 18 ein Zwischenrad angeordnet sein. Maßgebend für die Erfindung ist, daß mit sehr einfachen Mitteln und in Art eines Baukastensystems die Kennlinie der Mischbatterie dem Bedarf angepaßt werden kann.

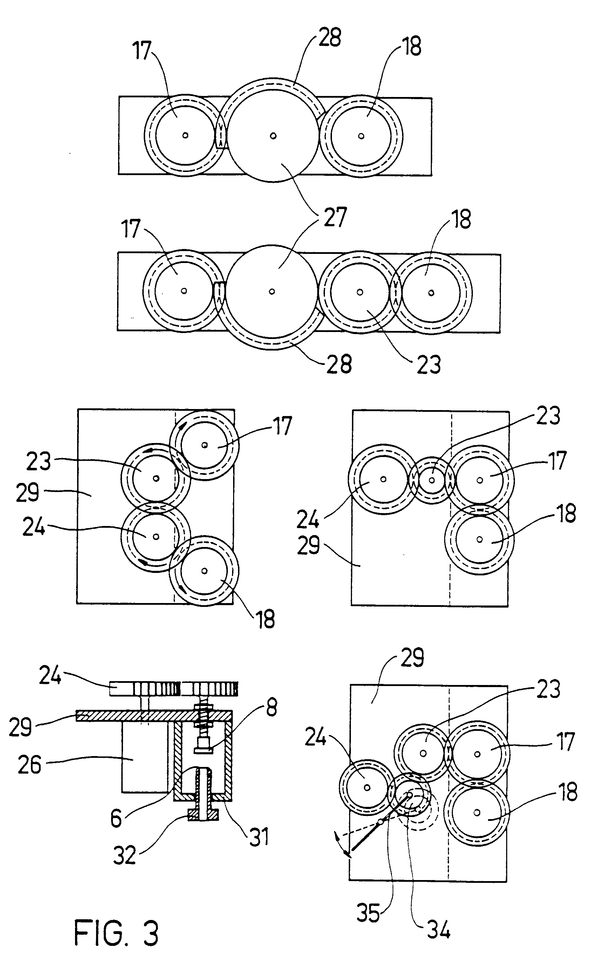

In Fig. 3 sind verschiedene Zahnradgetriebe dargestellt, so wie sie bei der erfindungsgemäßen Mischbatterie verwendbar sein könnten. Auch hier handelt es sich um eine kleine Auswahl der tatsächlichen Möglichkeiten.

Als erstes sind drei Zahnräder stirnseitig dargestellt, von denen die beiden äußeren. Zahnräder 17 und 18 jeweils ein bewegliches Ventilglied betätigen, während das mittlere Zahnrad 27 nur einen halben Zahnkranz 28 aufweist. Dieses Zahnrad 27 ist das Antriebsrad, während die Zahnräder 17 und 18 Abtriebsräder sind. Wenn nun das Zahnrad 27 verdreht wird, wird jeweils nur eines der beiden Abtriebsräder 17 oder 18 verdreht, während das andere aufgrund der Zahnkranzlücke stehenbleibt. Die Größenverhältnisse der Zahnräder 17, 18 zu 27 sind so gewählt, daß eine ausreichende Verdrehung der Zahnräder 17, 18 erfolgt, um entsprechend die gewünschte Ventilverstellung zu erzielen.

Beim nächsten Schema sind vier Zahnräder in Reihe angeordnet, von denen wiederum das Zahnrad 27 nur einen halben Zahnkranz 28 aufweist. Zwischen dem Zahnrad 27 und dem Zahnrad 28 ist ein Zwischenzahnrad 23 vorgesehen, das lediglich leerläuft und so die Drehrichtung zwischen Zahnrad 27 und 18 gleichschaltet. Natürlich können die Zahnräder auch anders angeordnet sein, diese beiden Ausführungen zeigen vor allem, daß auch ein Zahnrad mit einem Teilkranz entsprechend einsetzbar ist.

Bei den darunter dargestellten drei Zahnradkombinationen sind die Zahnräder auf einer Montageplatte 29 angeordnet, die wiederum an das Ventilgehäuse 31 montiert ist. Die Darstellung ist nur schematisch. Im Ventilgehäuse ist über einen Schraubnippel 32 der Ventilsitz 6 gebildet, der mit dem beweglichen Ventilteil 8 zusammenwirkt. Auf diese Weise ist die Höhe des Ventilsitzes zusätzlich einstellbar. Ebenfalls an die Montageplatte 29 ist hier der Stellmotor 26 montiert, der ein Antriebszahnrad 24 betätigt.

Beim erstdargestellten Getriebe dieser Gruppe treibt das Antriebsrad 24 einerseits unmittelbar das Abtriebsrad 18 des einen Ventiles und über ein Zwischenzahnrad 23 das Abtriebszahnrad 17 des zweiten Ventiles an. Hierdurch wird erzielt, daß beide Abtriebsräder in der gleichen Drehrichtung verstellt werden.

Bei dem rechts daneben dargestellten Getriebe wird durch das Antriebsrad 24 nur das Zwischenrad 23 angetrieben, welches wiederum das Abtriebsrad 17 des einen Ventils betätigt, wonach dieses das Abtriebsrad 18 des zweiten Ventiles verdreht. Hierbei ist die Drehrichtung der beiden Abtriebsräder 17 und 18 entgegengesetzt.

In dem darunter dargestellten Getriebeschema gilt im Prinzip das gerade Beschriebene, nur, daß zwischen dem Antriebsrad 24 und dem Zwischenzahnrad 23 ein Kupplungszahnrad 34 über einen Hebel 35 einsetzbar ist. Das Zwischenzahnrad 23 wird also erst dann verdreht, wenn der Hebel 35 das Kupplungszahnrad 34 in die dargestellte Stellung schwenkt.

Alle in der Beschreibung, den nachfolgenden Ansprüchen und der Zeichnung dargestellten Merkmale können sowohl einzeln als auch in beliebiger Kombination miteinander erfindungswesentlich sein.

**Patentansprüche**

1. Mischbatterie für Flüssigkeiten
   - mit einem Ventilblock mit mindestens zwei in Ventilgehäusen (14, 15) angeordneten Ventilen (1, 2), deren auf zueinander parallelen Ventilwellen (12) angeordnete Ventilglieder (8, 9) jeweils einen Strömungsquerschnitt steuern, wobei die Querschnittsänderung der Strömungsquerschnitte durch Verdrehen der Ventilwellen (12) der beweglichen Ventilglieder (8, 9) erfolgt (über Schneckengewinde),
   - mit außerhalb der Ventilgehäuse (14, 15) jeweils auf den Ventilwellen befestigten Zahnrädern (17, 18), deren Zähne ineinanderkämmen, als Kupplung zwischen den Ventilwellen (12), so daß bei der Verstellung des ersten Ventilglieds (8) das zweite Ventilglied (9) verstellbar ist, wobei die Querschnittsänderung am zweiten Ventil (2) aufgrund eines zwischen den Zahnrädern (17, 18) vorgesehenen Übersetzungsverhältnisses von der Querschnittsänderung am ersten Ventil (1) abweicht,
   - und mit an den Zahnrädern (17, 18) oder an zusätzlich vorgesehenen Zwischenzahnrädern (23, 27) oder an ebenfalls zusätzlich vorgesehenen, mit einem Stellmotor (26) verbundenen Antriebszahnrädern (24) vorhandenen Zahnlücken zur vorübergehenden Verdrehunterbrechung an mindestens einem der Zahnräder (17, 18).

2. Mischbatterie nach Anspruch 1, dadurch gekennzeichnet, daß die Zahnräder (17, 18, 23, 24) als Sätze gegen andere Sätze mit anderen Durchmesserverhältnissen austauschbar sind.

3. Mischbatterie nach Anspruch 1 oder 2, dadurch gekennzeichnet, daß zum Antrieb mindestens eines der Ventilglieder (8, 9) oder der Zahnräder (17, 18) ein Stellmotor (26) dient.

4. Mischbatterie nach einem der Ansprüche 1 bis 3, dadurch gekennzeichnet, daß mindestens drei Flüssigkeitszuströme über entsprechend mindestens drei unabhängig bewegliche Ventilglieder steuerbar sind.

5. Mischbatterie nach einem der vorhergehenden Ansprüche, dadurch gekennzeichnet, daß mindestens bei einem der Ventile das bewegliche Ventilglied ein nachgiebiges Dichtteil oder einen nachgiebigen Sitz aufweist, so daß vom geschlossenen Zustand ausgehend erst nach einem der Nachgiebigkeit entsprechenden Hub die zugeordnete Zuflußleitung geöffnet wird und in Schließrichtung das Ventil sperrt, obwohl das bewegliche Ventilglied in Schließrichtung weiter bewegt wird.

6. Mischbatterie nach einem der vorhergehenden Ansprüche, dadurch gekennzeichnet, daß der Ventilsitz an einem Nippel angeordnet ist, der zur Justierung der Sitzlage im Ventilgehäuse verschraubbar ist.

## Claims

1. Mixing device for liquids
   - with a valve block with at least two valves (1, 2) arranged in valve housings (14, 15), the valve links (8, 9) of which are arranged on shafts (12) which lie parallel to one another and which each control a flow cross-section, with the change in the flow cross-section being effected by rotating the valve shafts (12) of the movable valve links (8, 9) (using a worm drive),
   - with toothed wheels (17, 18) attached outside the valve housing (14, 15), and in each case on the valve shafts, with their teeth intermeshing, as a coupling between the valve shafts (12), in such a way that when the first valve link (8) is adjusted the second valve link (9) can also be adjusted, and the change in the cross-section at the second valve (2) varying from the cross-section change at the first valve (1) because of a gearing ratio provided between the toothed wheels (17, 18),
   - and with gaps between the teeth of the toothed wheels (17, 18) or between those of additionally fitted intermediated toothed wheels (23, 27) or of likewise additionally fitted drive gears (24) linked with a static drive motor (26) for temporarily interrupting the rotation of at least one of the toothed wheels (17, 18).

2. Mixing device on the lines of Claim 1, characterised by the toothed wheels (17, 18, 23, 24) being arranged as sets of gears and being interchangeable with other sets of gears with differing relative diameters.

3. Mixing device on the lines of Claim 1 or Claim 2, characterised by a static drive motor (26) serving to drive at least one of the valve links (8, 9) or the toothed wheels (17, 18).

4. Mixing device on the lines of Claims 1 to 3, characterised by at least three flows of liquids being separately controllable by at least three independently movable valve links.

5. Mixing device on the lines of one of the foregoing Claims, characterised by the movable valve link of at least one of the valves being fitted with a compressible sealing part or a compressible seat, so that, starting from the closed position, the inflow line connected with it is only opened, and is only closed in the closing direction, after being lifted by the amount that corresponds with the compressibility, although the movable valve link is moved further in the closing direction.

6. Mixing device on the lines of one of the foregoing Claims, characterised by the valve seat being joined to a nipple which can be adjusted by screwing it in order to set the seating position in the valve housing.

## Revendications

1. Robinet mitigeur pour fluides
   - comportant un bloc soupapes doté au minimum de deux soupapes (1, 2) disposées dans des cages de soupape (14, 15) et dont les éléments (8, 9) agencés sur des arbres (12) placés en parallèle commandent respectivement une section de passage, étant entendu que la modification de ces mêmes sections intervient en tournant les arbres (12) des éléments mobiles de soupape (8, 9) (par l'intermédiaire d'un filet sans fin),

- comportant, à l'extérieur des cages de soupape (14, 15), des roues dentées (17, 18) servant d'accouplement entre les arbres de soupape (12) - lesquelles sont respectivement fixées sur les arbres de soupape et présentent des dents s'engrenant les unes dans les autres - si bien que le second élément de soupape (9) peut être réglé au moment du réglage du premier élément de soupape (8), étant entendu que la modification de la section de passage sur la seconde soupape (2) diffère de celle pratiquée sur la première soupape (1) compte tenu de la multiplication prévue entre les roues dentées (17, 18),

- et comportant des entredents au niveau des roues dentées (17, 18) ou au niveau des roues dentées intermédiaires (23, 27) prévues en plus ou bien encore au niveau des roues dentées motrices (24) reliées à un servomoteur (26) prévues elles aussi en plus, entredents permettant une interruption temporaire de la torsion à la hauteur d'au moins une des roues dentées (17, 18).

2. Robinet mitigeur selon la revendication 1, caractérisé par le fait que les roues dentées (17, 18, 23, 24) prenant la forme de jeux peuvent être remplacées par d'autres jeux présentant d'autres diamètres.

3. Robinet mitigeur selon la revendication 1 ou 2, caractérisé par le fait qu'un servomoteur (26) sert à assurer l'entraînement d'au moins un des éléments de soupape (8, 9) ou des roues dentées (17, 18).

4. Robinet mitigeur selon l'une des revendications 1 à 3, caractérisé par le fait qu'au moins trois afflux de fluide peuvent être gérés par l'intermédiaire en conséquence d'au moins trois éléments de soupape mobiles indépendamment les uns des autres.

5. Robinet mitigeur selon l'une des revendications précédentes, caractérisé par le fait qu'au moins sur l'une des soupapes, l'élément mobile présente une pièce d'étanchéité déformable ou un siège déformable lui aussi si bien que si l'on part de l'état fermé, la conduite d'amenée lui coordonnée ne s'ouvrira et la soupape ne fera barrage dans le sens de la fermeture qu'au terme d'une course correspondant à l'élasticité et ce, bien que l'élément de soupape mobile continue de se mouvoir dans le sens de la fermeture.

6. Robinet mitigeur selon l'une des revendications précédentes, caractérisé par le fait que le siège de la soupape est disposé à la hauteur d'un nipple susceptible d'être vissé en vue de régler le positionnement à l'intérieur de la cage de la soupape.

FIG. 1

FIG. 2

FIG. 3